# EUROPÄISCHE PATENTANMELDUNG

(11) **EP 2 264 672 A2**
(43) Veröffentlichungstag der Anmeldung: **22.12.2010**
(21) Anmeldenummer: 10164731.1
(22) Anmeldetag: 02.06.2010
(51) Int. Cl.: G07C 9/00, B60R 25/00

(54) **Schlüssel für ein Schlosssystem eines Kraftfahrzeugs**

(30) Priorität: 19.06.2009 DE 102009027051
(71) Anmelder: Huf Hülsbeck & Fürst GmbH & Co. KG, 42551 Velbert (DE)
(72) Erfinder: Ziller, Boris, 40885 Ratingen (DE)
(74) Vertreter: Zenz

(57) **Zusammenfassung**

Bei einem Schlüssel für ein Schlosssystem eines Kraftfahrzeugs (7), der einen Basisschlüssel (2) mit einem Basisgehäuse (3) aufweist, in welchem eine Elektronikeinheit (4) mit einer Sende-Empfangs-Einheit (5) untergebracht ist, soll eine verbesserte Ausführungsform geschaffen werden, durch welche eine verbesserte Funktionalität sowie ein erhöhter Komfort erzielt werden kann. Diese Aufgabe wird gelöst durch einen Schlüssel (1), bei dem das Basisgehäuse (3) eine Aufnahme (10) für ein entnehmbares Schlüsselmodul (9) aufweist, das eine zweite Elektronikeinheit (11) umfasst, die in dem Schlüsselmodul (9) hermetisch gekapselt ist und eine zweite Sende-Empfangs-Einheit (12) aufweist, wobei die zweite Sende-Empfangs-Einheit (12) einen passiven Transponder (13) aufweist, wobei der Basisschlüssel (2) derart ausgebildet ist, dass die für einen Start des Kraftfahrzeugs (7) erforderlichen Daten ausschließlich dann im Basisschlüssel (2) zur Verfügung stehen, wenn das Schlüsselmodul (9) sich in der Aufnahme des Basisschlüssels (2) befindet.

## Beschreibung

Die Erfindung betrifft einen Schlüssel für ein Schlosssystem eines Kraftfahrzeugs, der einen Basisschlüssel mit einem Basisgehäuse aufweist, in welchem eine Elektronikeinheit mit einer Sende-Empfangs-Einheit untergebracht ist.

Ein solcher Schlüssel ist als elektronischer Schlüssel oder mobiler Identifikationsgeber (ID-Geber) bekannt, der für zahlreiche Anwendungen bei Kraftfahrzeugen zur Erhöhung des Bedienerkomforts und zur Steigerung der Diebstahlsicherung eingesetzt wird. Während in der Vergangenheit diverse Funktionalitäten für ein Kraftfahrzeug mittels einer Vielzahl von einzelnen Steuergeräten realisiert wurden, tendiert die jüngste Entwicklung von elektronischen Schlüsseln dazu, die Funktionalitäten in einem einzigen Steuergerät, nämlich dem Schlüssel, zu vereinigen. Dabei muss auf kleinstem Raum eine Fülle an Elektronik und gegebenenfalls Mechanik untergebracht werden. Dies hat zur Folge, dass moderne (elektronische) Schlüssel größer und darüber hinaus auch empfindlicher sowie störanfälliger gegenüber Witterungseinflüssen und Erschütterungen werden.

Es ist Aufgabe der vorliegenden Erfindung, einen Schlüssel der vorstehend beschriebenen Art in einer verbesserten Ausführungsform zu schaffen, der die genannten Nachteile unter gleichzeitiger Beibehaltung der Funktionalitätsvielfalt vermeidet.

Diese Aufgabe wird erfindungsgemäß durch einen Schlüssel für ein Schlosssystem eines Kraftfahrzeugs mit den Merkmalen des Anspruchs 1 gelöst.

Der erfindungsgemäße Schlüssel für ein Schlosssystem eines Kraftfahrzeugs weist einen Basisschlüssel mit einem Basisgehäuse auf, in welchem eine erste Elektronikeinheit untergebracht ist, die eine erste Sende-Empfangs-Einheit umfasst. Das Basisgehäuse weist eine Aufnahme für ein entnehmbares Schlüsselmodul auf, das eine zweite Elektronikeinheit umfasst. Die zweite Elektronikeinheit ist in dem Schlüsselmodul hermetisch gekapselt und umfasst eine zweite Sende-Empfangs-Einheit, die einen passiven Transponder aufweist. In der zweiten Sende-Empfangs-Einheit des Schlüsselmoduls sind erste Daten gespeichert, die bei einer Kommunikation mit einer fahrzeugseitigen Sende-Empfangs-Einheit abfragbar sind und die eine Legitimation für einen schlüssellosen Zugang (keyless entry) zum Kraftfahrzeug enthalten. In der zweiten Sende-Empfangs-Einheit des Schlüsselmoduls sind zweite Daten gespeichert, die bei einer Kommunikation mit der fahrzeugseitigen Sende-Empfangs-Einheit abfragbar sind und die für eine Legitimation für einen Start des Kraftfahrzeugs erforderlich sind. Der Basisschlüssel ist derart ausgebildet, dass die für einen Start des Kraftfahrzeugs erforderlichen zweiten Daten ausschließlich dann im Basisschlüssel zur Verfügung stehen, wenn das Schlüsselmodul sich in der Aufnahme des Basisschlüssels befindet.

Vorteilhafte und zweckmäßige Ausgestaltungen und Weiterbildungen der Erfindung ergeben sich aus den Unteransprüchen.

Mit der Erfindung wird ein modular aufgebauter Schlüssel für ein Schlosssystem eines Kraftfahrzeugs bereitgestellt. Der Basisschlüssel stellt dabei den Teil des Schlüssels dar, der neben den herkömmlichen Funktionen der Bedienung der Zentralverriegelung des Kraftfahrzeugs zusätzliche Funktionalitäten, wie beispielsweise die Betätigung der elektrischen Fensterheber oder des Schiebedachs sowie die Ansteuerung der Innenraumbeleuchtung, bereitstellt. Im Hinblick auf einen erhöhten Komfort des Schlüssels bietet die Erfindung die Möglichkeit, das Schlüsselmodul von dem mit diversen Funktionalitäten ausgestatteten Basisschlüssel zu trennen. Dies ist dann besonders vorteilhaft, wenn das Mitführen des kompletten Schlüssels bei Freizeitaktivitäten eher hinderlich ist und das Mitführen ein erhöhtes Sicherheitsrisiko in Bezug auf einen Diebstahl des Schlüssels verbunden mit einem Diebstahl des Kraftfahrzeugs darstellt. Der erfindungsgemäße Schlüssel bietet beispielsweise im Urlaub bei einem Strandbesuch die Möglichkeit, das Schlüsselmodul von dem Basisschlüssel zu trennen und den Basisschlüssel im Kraftfahrzeug einzuschließen. Dadurch, dass der Basisschlüssel allein keine Legitimation zum Starten des Kraftfahrzeugs aufweist, kann das Kraftfahrzeug durch einen unrechtmäßigen Besitz des Basisschlüssels nicht entwendet werden. Das Schlüsselmodul selbst kann platzsparend mit an den Strand genommen werden und beispielsweise in einer kleinen Tasche einer Badehose verstaut werden. Eine Gefahr einer Beschädigung des Schlüsselmoduls besteht selbst bei der Mitnahme ins Wasser nicht, da die Elektronik des Schlüsselmoduls hermetisch gegen Umwelteinflüsse gekapselt ist. Es kann zum Beispiel wasserdicht ausgebildet sein und darüber hinaus gegen Stoßeinwirkungen unempfindlich sein. Das Schlüsselmodul besitzt die Legitimation für einen schlüssellosen Zugang zu dem Kraftfahrzeug sowie für einen Start des Kraftfahrzeugs, so dass auch ohne den Basisschlüssel das Kraftfahrzeug allein mit Hilfe des Schlüsselmoduls aufgeschlossen und gestartet werden kann. Zu diesem Zweck muss das Schlüsselmodul lediglich in den Nahfeldbereich der fahrzeugseitigen Sende-Empfangs-Einheit gebracht werden, damit der eigenenergielos arbeitende und seine Energie aus dem Feld der fahrzeugseitigen Sende-Empfangs-Einheit beziehende Transponder der Sende-Empfangs-Einheit des Schlüsselmoduls Daten, vorzugsweise bidirektional, mit der fahrzeugseitigen Sende-Empfangs-Einheit austauschen kann.

In einer vorteilhaften Ausgestaltung sieht die Erfindung vor, dass die zweite Sende-Empfangs-Einheit des Schlüsselmoduls und die erste Sende-Empfangs-Einheit des Basisschlüssels jeweils Identifikationsdaten aufweisen, wobei die erste Sende-Empfangs-Einheit des Basisschlüssels und die zweite Sende-Empfangs-Einheit des Schlüsselmoduls derart ausgestaltet sind, dass der Basisschlüssel und das Schlüsselmodul Daten und/oder Identifikationsdaten, vorzugsweise bidirektional, austauschen, wenn das Schlüsselmodul sich in der Aufnahme des Basisschlüssels befindet. Aus Gründen der Sicherheit ist dabei vorgesehen, dass die zweite Sende-Empfangs-Einheit des Schlüsselmoduls ausschließlich dann die ersten Daten und/oder die zweiten Daten an die erste Sende-Empfangs-Einheit des Basisschlüssels überträgt, wenn die jeweiligen Identifikationsdaten zueinander korrespondieren und wenn das Schlüsselmodul sich in der Aufnahme des Basisschlüssels befindet. Die auszutauschenden Daten können Identifikationsdaten oder andere Legitimationsinformationen aufweisen, durch die es möglich ist zu überprüfen, ob es sich bei dem Schlüsselmodul und dem Basisschlüssel um Teile eines Schlüssels für ein bestimmtes Schlosssystem handelt. Dadurch wird auf Seiten des Schlüssel verhindert, dass eine Übertragung der Legitimationsdaten, d.h. der ersten Daten und/oder der zweiten Daten, auf einen unberechtigten Basisschlüssel erfolgen. Erst wenn sichergestellt ist, dass der Basisschlüssel und das Schlüsselmodul Teile für ein bestimmtes Schlosssystem bilden, ist eine Übertragung von ersten und/oder zweiten Daten von der zweiten Sende-Empfangs-Einheit zu der ersten Sende-Empfangs-Einheit möglich.

In Weiterbildung der Erfindung ist vorgesehen, dass die für eine Legitimation für einen Start des Kraftfahrzeugs erforderlichen Daten aus ersten Teildaten, die in der ersten Sende-Empfangseinheit gespeichert sind, und aus zweiten Teildaten, die in der zweiten Sende-Empfangs-Einheit als die zweiten Daten oder als Teil der zweiten Daten gespeicherten sind, zusammensetzbar sind. Dies trägt zu einer Erhöhung der Sicherheit bei, da ein Start des Kraftfahrzeugs einen Datenaustausch zwischen dem Schlüsselmodul und dem Basisschlüssel voraussetzt, so dass beide Teile des Schlüssels bzw. Gesamtschlüssels vorhanden sein müssen.

Alternativ ist es aber auch denkbar, dass die für eine Legitimation für einen Start des Kraftfahrzeugs erforderlichen Daten ausschließlich in den zweiten Daten der zweiten Sende-Empfangs-Einheit des Schlüsselmoduls enthalten sind. Bei einem Verlust des Basisschlüssels gehen zwar die nur dem Basisschlüssel innewohnenden Funktionalitäten verloren, jedoch kann mit Hilfe des Schlüsselmoduls das Kraftfahrzeug geöffnet und gestartet werden.

In weiterer Ausgestaltung sieht die Erfindung vor, dass die erste Sende-Empfangs-Einheit des Basisschlüssels die für eine Legitimation zum schlüssellosen Zugang zum Kraftfahrzeug und/oder die für eine Legitimation für einen Start des Kraftfahrzeugs erforderlichen Daten ausschließlich dann an die fahrzeugseitige Sende-Empfangs-Einheit überträgt, wenn die Identifikationsdaten der ersten und/oder zweiten Sende-Empfangs-Einheit zu Identifikationsdaten der fahrzeugseitigen Sende-Empfangs-Einheit korrespondieren und wenn das Schlüsselmodul sich in der Aufnahme des Basisschlüssels befindet. Dies impliziert einen Datenaustausch der ersten Sende-Empfangs-Einheit mit der fahrzeugseitigen Sende-Empfangs-Einheit, der gewissen Sicherheitsaspekten bei der Funkübertragung von fahrzeugsensiblen Daten sowie Betätigungssignalen Rechnung trägt.

Die Legitimationen für einen schlüssellosen Zugang zum Kraftfahrzeug sowie für einen Start des Kraftfahrzeugs stehen grundsätzlich nur dann im Basisschlüssel zur Verfügung, wenn das Schlüsselmodul sich in der Aufnahme des Basisschlüssels befindet. Der Basisschlüssel verfügt daher über keinerlei Legitimationen. Diese erhält er nur in Verbindung mit dem Schlüsselmodul. Alternativ ist es aber denkbar, dass in der ersten Sende-Empfangs-Einheit des Basisschlüssels dritte Daten gespeichert sind, die bei einer Kommunikation mit der fahrzeugseitigen Sende-Empfangs-Einheit abfragbar sind und die eine Legitimation für einen schlüssellosen Zugang zum Kraftfahrzeug enthalten. Dadurch ist es zumindest möglich, mit dem Basisschlüssel einen schlüssellosen Zugang zum Kraftfahrzeug zu erhalten.

Die Erfindung sieht in Weiterbildung vor, dass der Basisschlüssel eine fahrzeugspezifische Daten darstellende Anzeige und Betätigungselemente zur Bedienung eines von der Anzeige dargestellten Menüfeldes aufweist. Die darstellende bzw. optische Anzeige kann mehrere (anorganische) lichtemittierende Dioden (LED) oder organische lichtemittierende Dioden (OLED) aufweisen. Alternativ kann die optische Anzeige eine LCD-Anzeige sein. Die fahrzeugspezifischen Daten umfassen dabei eine Vielzahl von Funktionalitäten, wie beispielsweise eine elektrisch betriebene Lenkradverriegelung, eine elektrische Zentralverriegelung, eine Betätigung der elektrischen Fensterheber, eine Betätigung des Schiebedachs, eine Ansteuerung der Innenraumbeleuchtung, eine Ansteuerung der Ausstiegswarnleichten sowie eine Reifendruckkontrolle.

Besonders zweckmäßig ist es, wenn das Schlüsselmodul die Form einer SIM-Karte, vorzugsweise im ID-000-Format, aufweist. Durch diese Ausgestaltung des Schlüsselmoduls kann dieses von einer Person auf äußerst platzsparende Weise mit sich geführt werden. Eine besondere Sorgfalt muss die Person im Umgang mit dem Schlüsselmodul nicht aufwenden, da die Elektronik des Schlüsselmoduls hermetisch und wasserdicht gekapselt und gegenüber äußeren Einflüssen sowie Stoßeinwirkungen geschützt ist.

Im Fall eines Ausfalls der Elektronik des Kraftfahrzeugs und/oder des Basisschlüssels und/oder des Schlüsselmoduls ist es schließlich von Vorteil, wenn der Basisschlüssel einen mechanischen Schlüssel aufweist, der in dem Basisgehäuses untergebracht ist und aus diesem entnehmbar oder ausschwenkbar ist und der ausschließlich eine Legitimation für einen Zugang zum Kraftfahrzeug besitzt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist.

In der Zeichnung zeigt:
Figur 1 in schematischer Darstellung einen Basisschlüssel und ein Schlüsselmodul eines erfindungsgemäßen Schlüssels in Rückansicht und
Figur 2 in schematische Darstellung den Schlüssel in Draufsicht.

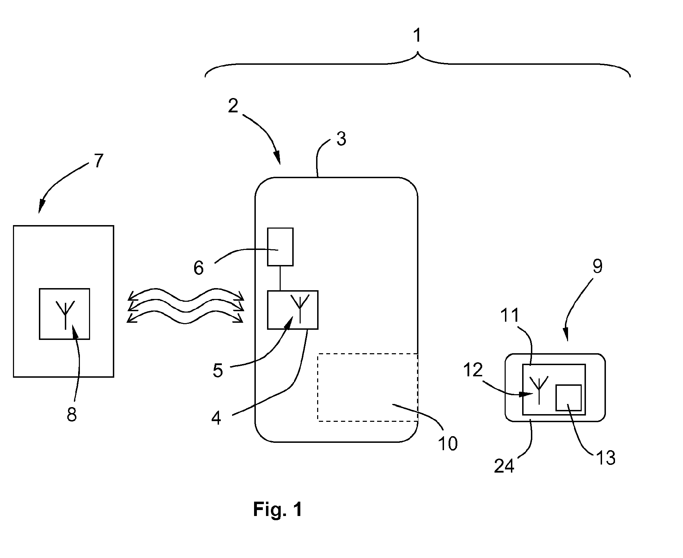

In Figur 1 ist rein schematisch ein Schlüssel 1 für ein Schlosssystem eines Kraftfahrzeugs dargestellt, der üblicherweise auch als mobiler Identifikationsgeber (ID-Geber) bezeichnet wird. Das Schlosssystem kann sich auf eine Zentralverriegelung eines Fahrzeugs beziehen, die auf elektrische Weise für eine Verriegelung und Entriegelung von Türen und einer Kofferraumklappe bzw. einer Ladeklappe sorgt. Von dem Schlosssystem können ferner auch verschließbare Fächer im Inneren des Kraftfahrzeugs umfasst sein, wie zum Beispiel das Handschuhfach, welches mittels des Schlüssels 1 verriegelt und entriegelt werden kann. Der Schlüssel 1 umfasst einen Basisschlüssel 2, der ein Basisgehäuse 3 aufweist. Bei dem Basisgehäuse 3 kann es sich um ein spritzwassergeschütztes Gehäuse aus beispielsweise Kunststoff handeln, so dass das Innenleben des Basisschlüssels vor Wasser geschützt ist. In dem Basisgehäuse 3 ist eine erste Elektronikeinheit 4 mit einer ersten Sende-Empfangs-Einheit 5 angeordnet. Die Sende-Empfangs-Einheit 5, die mit einer Batterie 6 als Energiespeicher versorgt wird, kann mit einer in oder an einem Kraftfahrzeug 7 integrierten Sende-Empfangs-Einheit 8 in Kommunikation stehen, wobei fahrzeugseitig üblicherweise mehrere Sende-Empfangs-Einheiten 8 vorgesehen sind, die beispielsweise in einem Türgriffmodul, im Innenraum, am Kofferraum oder im Heckbereich des Kraftfahrzeugs angeordnet sind.

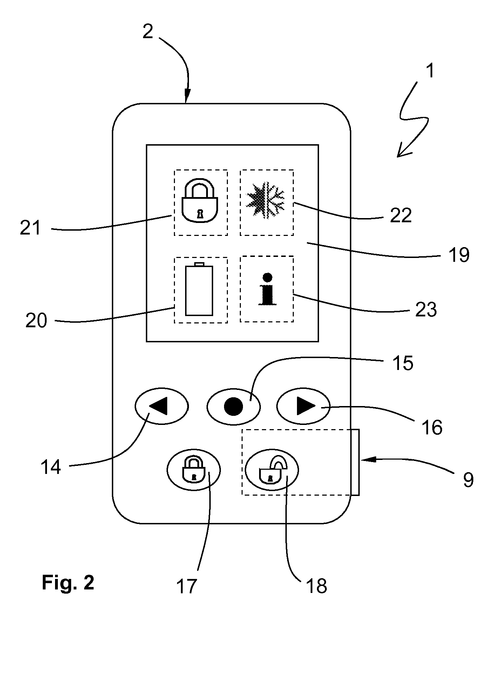

Auf der Oberseite des Basisschlüssels 2 sind Tastenfelder oder Betätigungselemente 14, 15, 16, 17, 18 zur aktiven Auslösung einer Funktionalität integriert, wie in Figur 2 zu sehen ist. Die bereitgestellten Funktionalitäten können sich hierbei auf die Wegfahrsperre, die elektrisch betriebene Lenkrad- und/oder Zentralverriegelung, auf eine Betätigung der elektrischen Fensterheber und des Schiebedachs, auf die Ansteuerung der Innenraumbeleuchtung, auf die Standheizung oder Klimaanlage sowie auf eine Reifendruckkontrolle des Kraftfahrzeugs 7 beziehen.

Der Schlüssel 1 umfasst ferner ein Schlüsselmodul 9, welches in einer in dem Basisgehäuse 3 ausgebildeten Aufnahme 10 des Basisschlüssels 2 einschiebbar oder einsteckbar ist. Das Schlüsselmodul 9 ist aus der Aufnahme 10 entnehmbar, d.h. vom Basisschlüssel 2 separierbar, und weist eine zweite Elektronikeinheit 11 auf, die von dem Gehäuse bzw. der Hülle 24 des Schlüsselmoduls 9 hermetisch gekapselt ist. Die zweite Elektronikeinheit 11 ist somit wasserdicht in dem Schlüsselmodul 9 aufgenommen und umfasst eine zweite Sende-Empfangs-Einheit 12 mit einem passiven Transponder 13, der eigenenergielos arbeitet und seine Energie durch Induktion des Funksignals der ersten Sende-Empfangs-Einheit 5 und/oder des Funksignals der fahrzeugseitigen Sende-Empfangs-Einheit 8 bezieht. In der dargestellten Ausführungsform weist das Schlüsselmodul 9 die Form einer SIM-Karte auf. Ein beispielhaftes Format für das Schlüsselmodul 9 ist das ID-000-Format, welches einer Größe von 25,4 mm x 15 mm entspricht und hauptsächlich für SIM-Karten verwendet wird.

Das Schlüsselmodul 9 weist ferner erste Daten und zweite Daten auf, die in der zweiten Sende-Empfangs-Einheit 12 gespeichert sind. Bei einer Kommunikation mit dem Kraftfahrzeug 7 sind diese Daten von der fahrzeugseitigen Sende-Empfangs-Einheit 8 abfragbar, wobei die ersten Daten eine Legitimation für einen schlüssellosen Zugang (keyless entry) zum Kraftfahrzeug 7 enthalten, wohingegen die zweiten Daten für eine Legitimation für einen Start des Kraftfahrzeugs 7 erforderlich sind. Der Basisschlüssel 2 ist derart ausgebildet, dass die für einen Start des Kraftfahrzeugs 7 erforderlichen zweiten Daten ausschließlich dann im Basisschlüssel 2 zur Verfügung stehen, wenn das Schlüsselmodul 9 sich in der Aufnahme 10 des Basisschlüssels 2 befindet. Üblicherweise werden die zweiten Daten von der zweiten Sende-Empfangs-Einheit 12 zu der ersten Sende-Empfangs-Einheit 5 übertragen, so dass diese im Basisschlüssel 2 zur Verfügung stehen und mittels der ersten Sende-Empfangs-Einheit 5 an die fahrzeugseitige Sende-Empfangs-Einheit 8 übertragen werden können. Aus Sicherheitsgründen kann bei beiden Kommunikationswegen eine bidirektionale Kommunikation zwischen den Sende-Empfangs-Einheiten 5, 8, 12 vorgesehen sein, so dass vor dem Austausch von Legitimationsdaten zuvor Identifikationsdaten ausgetauscht und überprüft werden.

Aus diesem Grund wird, bevor die erste Sende-Empfangs-Einheit 5 des Schlüssels 1 mit der kraftfahrzeugseitigen Sende-Empfangs-Einheit 8 in Kommunikation tritt, sichergestellt, dass der Basisschlüssel 2 und das Schlüsselmodul 9 gemeinsamer Teil des Schlüssels 1 sind und einem bestimmten Kraftfahrzeug 7 zugeordnet sind. Aus Sicherheitsgründen können die zweite Sende-Empfangs-Einheit 12 des Schlüsselmoduls 9 und die erste Sende-Empfangs-Einheit 5 des Basisschlüssels 2 jeweils Identifikationsdaten aufweisen, die vor der ersten Ausübung einer Funktionalität des Schlüssels 1 überprüft werden. Stimmen die Identifikationsdaten überein oder deuten diese darauf hin, dass es sich bei dem Basisschlüssel 2 und dem Schlüsselmodul 9 um die berechtigten Komponenten des Schlüssels 1 handelt, so werden zusätzlich die für einen Start des Kraftfahrzeugs 7 erforderlichen zweiten Daten im Basisschlüssel 2 bereit gestellt, vorausgesetzt, das Schlüsselmodul 9 befindet sich in der Aufnahme 10 des Basisschlüssels 2. Zur Identifikation und zur Bereitstellung der zweiten Daten findet zwischen der ersten Sende-Empfangs-Einheit 5 und der zweiten Sende-Empfangs-Einheit 12 ein bidirektionaler Datenaustausch statt, wobei die ersten Daten und/oder die zweiten Daten an die erste Sende-Empfangs-Einheit 5 des Basisschlüssels 2 nur dann übertragen werden, wenn die jeweiligen Identifikationsdaten zueinander korrespondieren. Nach der Übertragung an die erste Sende-Empfangs-Einheit 5 stehen die zweiten Daten im Basisschlüssel 2 zur Verfügung und ein Starten des Kraftfahrzeugs 7 ist möglich.

Die zweiten Daten, die für eine Legitimation für einen Start des Kraftfahrzeugs 7 erforderlich sind, können ausschließlich in der zweiten Sende-Empfangs-Einheit 12 des Schlüsselmoduls 9 enthalten sein. Alternativ ist es denkbar, dass die für eine Legitimation für einen Start des Kraftfahrzeugs 7 erforderlichen zweiten Daten aus ersten Teildaten, die in der ersten Sende-Empfangseinheit 5 gespeichert sind, und zweiten Teildaten, die in der zweiten Sende-Empfangs-Einheit 12 als die zweiten Daten oder als Teil der zweiten Daten gespeicherten sind, zusammensetzbar sind.

Aus Gründen der Sicherheit ist vorgesehen, dass die erste Sende-Empfangs-Einheit 5 des Basisschlüssels 2 und die fahrzeugseitige Sende-Empfangs-Einheit 8 die für eine Legitimation zum schlüssellosen Zugang zum Kraftfahrzeug 7 und/oder die für eine Legitimation für einen Start des Kraftfahrzeugs 7 erforderlichen Daten an die fahrzeugseitige Sende-Empfangs-Einheit 8 überträgt, wenn die Identifikationsdaten der ersten Sende-Empfangs-Einheit 5 und/oder zweiten Sende-Empfangs-Einheit 12 zu Identifikationsdaten der fahrzeugseitigen Sende-Empfangs-Einheit 8 korrespondieren und wenn das Schlüsselmodul 9 sich in der Aufnahme 10 des Basisschlüssels 2 befindet.

Ferner können in der ersten Sende-Empfangs-Einheit 5 des Basisschlüssels 2 dritte Daten gespeichert sein, die bei einer Kommunikation mit der fahrzeugseitigen Sende-Empfangs-Einheit 8 abfragbar sind und die eine Legitimation für einen schlüssellosen Zugang zum Kraftfahrzeug 7 enthalten. Auf diese Weise ist auch ein Zugang zum Kraftfahrzeug 7 allein mittels des Basisschlüssels 2 möglich, ohne dass das Schlüsselmodul 2 sich in der Aufnahme 10 des Basisschlüssels 2 befinden muss.

Wenn sich das Schlüsselmodul 9 in der Aufnahme 10 des Basisschlüssels 2 befindet, funktioniert der Schlüssel 1 wie ein üblicher Identifikationsgeber (ID-Geber). Um beispielsweise eine Funktion wie die Zentralverriegelung im Kraftfahrzeug 7 zu aktivieren wird dabei geprüft, ob der Fahrzeugnutzer über einen berechtigten Schlüssel 1 verfügt. Wenn sich der Fahrzeugnutzer mit dem berechtigten Schlüssel 1 dem Kraftfahrzeug 7 nähert, wird üblicherweise die Funkverbindung zwischen der fahrzeugseitigen Sende-Empfangs-Einheit 8 und dem Schlüssel 1 aufgebaut. Es erfolgt eine Überprüfung, ob der Schlüssel 1 für dieses Kraftfahrzeug 7 berechtigt ist, indem ein interner elektronischer und/oder logischer Schlüssel in Form von Identifikationsdaten auf Gültigkeit hin untersucht wird. Wird der Schlüssel 1 von der fahrzeugseitigen Sende-Empfangs-Einheit 8 als berechtigt erkannt, wird die Zentralverriegelung aktiviert und das Kraftfahrzeug 7 geöffnet. Diesem Datenaustausch liegt eine bidirektionale Kommunikation zwischen der ersten Sende-Empfangs-Einheit 5 des Basisschlüssels 2 und der fahrzeugseitigen Sende-Empfangs-Einheit 8 zugrunde.

Der beispielhaft in Figur 2 in einer Draufsicht dargestellte Schlüssel 1 umfasst mehrere Betätigungselemente 14, 15, 16, 17, 18 und eine optische Anzeige 19, auf der ein Menüfeld mit verschiedenen Menüpunkten 20, 21, 22, 23 darstellbar ist, über das kraftfahrzeugseitige Zustandsinformationen abfragbar, neu eingebbar oder veränderbar sind. Die neu eingegebenen oder veränderten Informationen werden hierbei von der in dem Basisschlüssel 2 integrierten Sende-Empfangs-Einheit 5 zum fahrzeugseitigen Teil übermittelt. Über das Menüfeld der optischen Anzeigeeinheit 19 kann der Benutzer die tatsächlichen Zustandsinformationen des Fahrzeugs abfragen und beispielsweise auf einen Blick feststellen, ob die Fahrzeugtüren und Fenster geschlossen sind, die Alarmanlage aktiviert ist oder ob sich die Schließvorrichtung im entriegelten oder verriegelten Zustand befindet. Ferner ist es denkbar, über einen Menüpunkt aktuelle Zustandsinformationen wie Kilometerstand, Reifendruck, Parkzeit oder den Termin der nächsten Inspektion abzufragen. Auch kann mittels des Basisschlüssels 2 die Klimaanlage oder die Standheizung des Kraftfahrzeugs 7 aktiviert werden.

In einer nicht dargestellten Ausführungsform ist es darüber hinaus möglich, dass in dem Basisschlüssel ein mechanischer Schlüssel untergebracht ist, der im Fall eines Ausfalls der Elektronik ein Entriegeln und Verriegeln des Kraftfahrzeugs ermöglicht. Der mechanische Schlüssel kann in eine in dem Basisgehäuse vorgesehene Aufnahme eingeschoben bzw. eingesteckt und aus der Aufnahme entnommen bzw. herausgezogen werden. Alternativ kann mittels einer in dem Basisgehäuse integrierten Mechanik der mechanische Schlüssel in das Basisgehäuse einklappbar und aus diesem ausschwenkbar sein. Der mechanische Schlüssel kann dabei derart beschaffen sein, dass er lediglich die Legitimation für einen Zugang zum Kraftfahrzeug aufweist. Denkbar ist aber auch, dass der mechanische Schlüssel alternativ oder zusätzlich die Legitimation zum Starten des Kraftfahrzeugs aufweist.

Der vorstehend beschriebene Schlüssel 1 ist nicht nur auf eine aktive Handhabung beschränkt. Er kann auch als passiver Schlüssel für die Ent- und Verriegelung verwendet werden, bei der es ausreichend ist, wenn sich der Schlüssel 1 in dem Signalbereich der fahrzeugseitigen Sende-Empfangseinheit 8 befindet. Dieser Bereich für den passiven Zugang beträgt in etwa 1,5 m, wohingegen die Reichweite für die aktive Handhabung mindestens 20 m beträgt. Der Schlüssel 1 stellt somit eine Kombination aus einer einfachen Fernbedienung und einem Identifikationsgeber dar.

## Patentansprüche

1. Schlüssel (1) für ein Schlosssystem eines Kraftfahrzeugs (7), der einen Basisschlüssel (2) mit einem Basisgehäuse (3) aufweist, in welchem eine erste Elektronikeinheit (4) untergebracht ist, die eine erste Sende-Empfangs-Einheit (5) umfasst,
wobei das Basisgehäuse (3) eine Aufnahme (10) für ein entnehmbares Schlüsselmodul (9) aufweist, das eine zweite Elektronikeinheit (11) umfasst, die in dem Schlüsselmodul (9) hermetisch gekapselt ist und eine zweite Sende-Empfangs-Einheit (12) aufweist, wobei die zweite Sende-Empfangs-Einheit (12) einen passiven Transponder (13) aufweist,
wobei in der zweiten Sende-Empfangs-Einheit (12) des Schlüsselmoduls (9) erste Daten gespeichert sind, die bei einer Kommunikation mit einer fahrzeugseitigen Sende-Empfangs-Einheit (8) abfragbar sind und die eine Legitimation für einen schlüssellosen Zugang (keyless entry) zum Kraftfahrzeug (7) enthalten,
wobei in der zweiten Sende-Empfangs-Einheit (12) des Schlüsselmoduls (9) zweite Daten gespeichert sind, die bei einer Kommunikation mit der fahrzeugseitigen Sende-Empfangs-Einheit (8) abfragbar sind und die für eine Legitimation für einen Start des Kraftfahrzeugs (7) erforderlich sind, und
wobei der Basisschlüssel (2) derart ausgebildet ist, dass die für einen Start des Kraftfahrzeugs (7) erforderlichen zweiten Daten ausschließlich dann im Basisschlüssel (2) zur Verfügung stehen, wenn das Schlüsselmodul (9) sich in der Aufnahme (10) des Basisschlüssels (2) befindet.

2. Schlüssel (1) nach Anspruch 1, wobei die zweite Sende-Empfangs-Einheit (12) des Schlüsselmoduls (9) und die erste Sende-Empfangs-Einheit (5) des Basisschlüssels (2) jeweils Identifikationsdaten aufweisen, und wobei die erste Sende-Empfangs-Einheit (5) des Basisschlüssels (2) und die zweite Sende-Empfangs-Einheit (12) des Schlüsselmoduls (9) derart ausgestaltet sind, dass der Basisschlüssel (2) und das Schlüsselmodul (9) Daten und/oder Identifikationsdaten, vorzugsweise bidirektional, austauschen, wenn das Schlüsselmodul (9) sich in der Aufnahme (10) des Basisschlüssels (2) befindet.

3. Schlüssel (1) nach Anspruch 2, wobei die zweite Sende-Empfangs-Einheit (12) des Schlüsselmoduls (9) ausschließlich dann die ersten Daten und/oder die zweiten Daten an die erste Sende-Empfangs-Einheit (5) des Basisschlüssels (2) überträgt, wenn die jeweiligen Identifikationsdaten zueinander korrespondieren und wenn das Schlüsselmodul (9) sich in der Aufnahme (10) des Basisschlüssels (2) befindet.

4. Schlüssel (1) nach einem der Ansprüche 1 bis 3, wobei die für eine Legitimation für einen Start des Kraftfahrzeugs (7) erforderlichen Daten aus ersten Teildaten, die in der ersten Sende-Empfangseinheit (5) gespeichert sind, und aus zweiten Teildaten, die in der zweiten Sende-Empfangs-Einheit (12) als die zweiten Daten oder als Teil der zweiten Daten gespeicherten sind, zusammensetzbar sind.

5. Schlüssel (1) nach einem der Ansprüche 1 bis 3, wobei die für eine Legitimation für einen Start des Kraftfahrzeugs (7) erforderlichen Daten ausschließlich in den zweiten Daten der zweiten Sende-Empfangs-Einheit (12) des Schlüsselmoduls (9) enthalten sind.

6. Schlüssel (1) nach einem der Ansprüche 2 bis 5, wobei die erste Sende-Empfangs-Einheit (5) des Basisschlüssels (2) die für eine Legitimation zum schlüssellosen Zugang zum Kraftfahrzeug (7) und/oder die für eine Legitimation für einen Start des Kraftfahrzeugs (7) erforderlichen Daten ausschließlich dann an die fahrzeugseitige Sende-Empfangs-Einheit (8) überträgt, wenn die Identifikationsdaten der ersten und/oder zweiten Sende-Empfangs-Einheit (5, 12) zu Identifikationsdaten der fahrzeugseitigen Sende-Empfangs-Einheit (8) korrespondieren und wenn das Schlüsselmodul (9) sich in der Aufnahme (10) des Basisschlüssels (2) befindet.

7. Schlüssel (1) nach einem der vorhergehenden Ansprüche, wobei in der ersten Sende-Empfangs-Einheit (5) des Basisschlüssels (2) dritte Daten gespeichert sind, die bei einer Kommunikation mit der fahrzeugseitigen Sende-Empfangs-Einheit (8) abfragbar sind und die eine Legitimation für einen schlüssellosen Zugang zum Kraftfahrzeug (7) enthalten.

8. Schlüssel (1) nach einem der vorhergehenden Ansprüche, wobei der Basisschlüssel (2) eine fahrzeugspezifische Daten darstellende Anzeige (19) und Betätigungselemente (14, 15, 16, 17, 18) zur Bedienung eines von der Anzeige (19) dargestellten Menüfeldes aufweist.

9. Schlüssel (1) nach einem der vorhergehenden Ansprüche, wobei das Schlüsselmodul (9) die Form einer SIM-Karte, vorzugsweise im ID-000-Format, aufweist.

10. Schlüssel (1) nach einem der vorhergehenden Ansprüche, wobei der Basisschlüssel (2) einen mechanischen Schlüssel aufweist, der in dem Basisgehäuses (3) untergebracht ist und aus diesem entnehmbar oder ausschwenkbar ist und der ausschließlich eine Legitimation für einen Zugang zum Kraftfahrzeug (7) besitzt.
